# EUROPEAN PATENT SPECIFICATION

(11) **EP 1 913 784 B1**
(45) Date of publication and mention of the grant of the patent: **22.07.2015**
(21) Application number: 06764454.2
(22) Date of filing: 26.06.2006
(51) Int. Cl.: H04W 4/24, H04W 8/18

(54) **METHODS AND APPARATUS FOR CHARGING A SUBSCRIBER ROAMING IN A MOBILE COMMUNICATION NETWORK**
VERFAHREN UND VORRICHTUNGEN ZUM ERHEBEN VON GEBÜHREN VON EINEM IN EINEM MOBILKOMMUNIKATIONSNETZ ROAMENDEN TEILNEHMER
PROCEDES ET APPAREIL DE TAXATION D'UN ABONNE ITINERANT DANS UN RESEAU DE COMMUNICATION MOBILE

(30) Priority: 30.06.2005 FI 20050697; 01.09.2005 US 219584
(43) Date of publication of application: 23.04.2008
(73) Proprietor: Nokia Technologies Oy, 02610 Espoo (FI)
(72) Inventor: YLIKOSKI, Martti, FI-00400 Helsinki (FI)
(74) Representative: Papula Oy
(86) International application number: PCT/FI2006/000228
(87) International publication number: WO 2007/003686

(56) References cited:
- EP-A1- 1 519 604
- WO-A1-02/13569
- US-A- 6 119 001
- US-A- 6 119 001
- US-A1- 2003 129 974
- US-A1- 2003 129 974
- US-A1- 2005 113 091
- US-B1- 6 493 551
- US-B1- 6 792 271
- US-B1- 6 792 271

## Description

### TECHNICAL FIELD

The invention relates to communication networks. In particular, the invention relates to charging a subscriber roaming in a mobile communication network in a novel way.

### BACKGROUND

Recently mobile communication networks have started to support transmission of packet switched data or packet data in addition to traditional circuit switched data transmission.

An example of a technique allowing packet data transmission for mobile communication networks is General Packet Radio Service (GPRS). GPRS is designed to support e.g. digital mobile telecommunication networks based on the Global System for Mobile Communications (GSM) standard. However, GPRS is not restricted to only GSM networks but may support for example 3^{rd} Generation Partnership Project (3GPP) based digital mobile telecommunication networks. Other examples of packet data based mobile communication networks are Wireless Local Area Network (WLAN) based mobile communication networks, Code Division Multiple Access (CDMA) based mobile communications networks, Wideband Code Division Multiple Access (WCDMA) based mobile communications networks, and Enhanced Data Rates for Global Evolution (EDGE) based mobile communication networks.

A GPRS based mobile communication network comprises supplementary network elements or nodes in addition to existing network elements. These include a Serving GPRS Support Node (SGSN) and a Gateway GPRS Support Node (GGSN). A Serving GPRS Support Node typically delivers packets to and from GPRS enabled terminal devices within its service area. A Gateway GPRS Support Node is typically used as an interface to external IP networks such as the Internet, other mobile service providers' GPRS services, or enterprise intranets.

The introduction of packet data based mobile communication networks has resulted in various value-added subscriber services being provided for these packet data based mobile communication networks. Examples of such subscriber services are packet data based voice, email, content downloading, browsing, streaming and rich calls. Furthermore, packet data based mobile communications networks typically offer network services to support the usage of subscriber services. Such network services include e.g. rerouting, barring, accounting, content proxy services, content blocking services, firewall services, virus scanning services, performance enhancement proxy services, Virtual Private Network (VPN) services, various Quality of Service (QoS) related services and various charging related services for both online and offline charging.

A recent trend is to provide the various subscriber and network services for packet data based mobile communications networks in a subscriber specific manner. To allow this, one or more subscription profiles are generated for each subscriber. The subscription profile comprises subscriber specifically customized subscription data that will be utilized in providing the various subscriber and network services to the terminal devices of the subscriber. The subscription data may comprise e.g. authorization information about which access points in the mobile communication network the subscriber is allowed to access, and which services are allowed within each allowed access point. The subscription data may further comprise e.g. information about charging attributes or rules, Quality of Service attributes or rules, and service chaining attributes such as attributes or rules for chained service selection and chained service component specific attributes or rules. An access point may be e.g. a Gateway GPRS Support Node of a General Packet Radio Service based mobile communication network, or a Packet Data Gateway of a Wireless Local Area Network based mobile communication network.

Prior art teaches storing the generated subscription profile in a subscriber database of a home network of the subscriber. As is known in the art, in the context of mobile communication networks, when a subscriber connects via a service area that is managed by an operator other than the one with whom the subscriber originally registered with, the subscriber is said to be "roaming". In contrast, when the subscriber connects via a service area that is managed by the operator with whom the subscriber originally registered with, the subscriber is said to be at "home". The mobile communication network managed by the operator with whom the subscriber originally registered with is called the home network of the subscriber. The subscriber database may be, for example, a Home Location Register in a General Packet Radio Service based mobile communication network.

The prior art solution of storing the generated subscription profile in the subscriber database of the home network of the subscriber works reasonably well while the subscriber is at home.

However, problems arise when the subscriber is roaming. When the terminal device of the subscriber roams into a visited network and requests to use a gateway of the visisted network, the gateway needs to acquire the subscription profile of the roaming terminal device. Prior art teaches ways of acquiring the subscription profile. A way involves the gateway of the visited network directly contacting the subscriber database of the home network of the roaming terminal device and requesting the subscription profile of the roaming terminal device. Another way involves the gateway of the visited network first contacting a session control means of the home network of the roaming terminal device and requesting the subscription profile of the roaming terminal device. The session control means in turn contacts the subscriber database of the home network of the roaming terminal device, requests the subscription profile of the roaming terminal device, and forwards relevant parts of the subscription profile to the gateway of the visited network. Yet another way involves the gateway of the visited network contacting the session control means of the visited network, and the session control means of the visited network contacting the subscriber database of the home network and requesting the subscription profile of the roaming terminal device. The session control means is sometimes also referred to as Internet Protocol Session Control, a Policy Decision Function (PDF), a Charging Rules Function (CRF) or a Policy and Charging Control Node (PCCN).

Thus, in the prior art, when the terminal device is roaming and its subscription profile is required, the subscription profile will always have to be transmitted from one network to another, i.e. from the home network to the visited network. This, however, is not desirable. Transmitting the subscription profile from one network to another requires real-time signaling which in turn causes delay. In today's highly loaded mobile communication networks real-time signaling and its associated delay is to be avoided whenever possible. Furthermore, transmitting the subscription profile from one network to another may not even be possible at all times due to e.g. some connection problem between the two networks. Furthermore, the transmission of the subscriber profile from the home network to the visited network is also difficult as international standards need to be agreed and every operator needs to implement them.

US 6,792,271 discloses a method and system for registering and operating a wireless telephone in a roaming service area in which the wireless telephone is not registered for roaming services. When a wireless telephone is operated in a such a roaming service area, the roaming service provider whose services the wireless telephone must utilize in order to operate in the roaming service area informs the user of the wireless telephone through a recorded or live message that the wireless telephone may be used in the roaming service area if the user of the wireless telephone purchases and uses a prepaid utilization account offered by the roaming service provider. If the user purchases a prepaid card and loads a balance into a prepaid utilization account, a prepaid services system of the roaming service provider establishes a pseudo-telephone number for use by the wireless telephone in the roaming service area. The user's home service provider is notified that all calls directed to the user's permanent wireless telephone number should be forwarded to the pseudo-number assigned to the wireless telephone. After this registration process is completed, calls may be placed to and from the wireless telephone in the roaming service area, and billing for those calls will be directed to the prepaid utilization account purchased by the user.

US 6,119,001 discloses an automatic activation of a roamer mobile station is implemented in a visited network home location register. Responsive to a registration attempt by the roamer mobile station a default subscriber profile is defined, and a temporary subscriber (directory) number is assigned. Arrangements are also made to insure subscriber payment for any network provided wireless telephone services. Following activation of the roamer mobile station, the default subscriber profile is downloaded for use in providing service. A timer is also started and thereafter monitored for expiration. If the timer expires before the occurrence of a wireless telephone service traffic event involving the roamer mobile station, automatic deactivation of the roamer in the home location register is implemented. In this regard, the default subscriber profile is deleted and the temporary subscriber (directory) number is returned. The billing account for any network provided wireless telephone services is also closed.

### SUMMARY OF THE PREFERRED EMBODIMENTS

According to a first aspect of the invention there is provided a method for charging a subscriber roaming in a mobile communication network for at least one service accessible though the mobile communication network, according to claim 1.

According to a second aspect of the invention there is provided a system for charging a subscriber roaming in a mobile communication network for at least one service accessible through the mobile communication network, according to independent claim 6.

The invention allows avoiding the need to transmit home subscription information from the home network of the roaming terminal device to the visited network. Rather, a temporary user subscription stored in the visited network is used and the temporary user subscription has been provided with a credit to user services. Furthermore, as the user subscription in the visited network is temporary, the user may be properly served even when there are connection problems between the home network and the visited network.

A further benefit of the invention is that there is no need to create additional standards for the solution disclosed in the invention. Therefore, no expensive modifications are required in existing mobile communications networks. Furthermore, the invention allows visited public land mobile network (VPLMN) operators to offer services to roaming subscribers.

In conclusion, the foregoing summary of aspects and embodiments of the present invention is exemplary and non-limiting. For example, one skilled in the art will understand that one or more aspects or steps from one embodiment can be combined with one or more aspects or steps from another embodiment of the present invention to create a new embodiment within the scope of the present invention.

### BRIEF DESCRIPTION OF THE DRAWINGS

The foregoing and other aspects of these teachings are made more evident in the following Detailed Description of the Preferred Embodiments, when read in conjunction with the attached Drawing Figures, wherein:
**FIG. 1** discloses a signaling diagram illustrating one embodiment of a method according to the invention;
**FIG. 2** discloses a signaling diagram illustrating another embodiment of a method according to the invention;
**FIG. 3** discloses a signaling diagram illustrating one embodiment of a method according to the invention;
**FIG. 4** discloses one embodiment of a system according to the invention; and
**FIG. 5** discloses another embodiment of a system according to the invention.

### DETAILED DESCRIPTION OF THE PREFERRED EMBODIMENTS

Reference will now be made in detail to the embodiments of the present invention, examples of which are illustrated in the accompanying drawings.

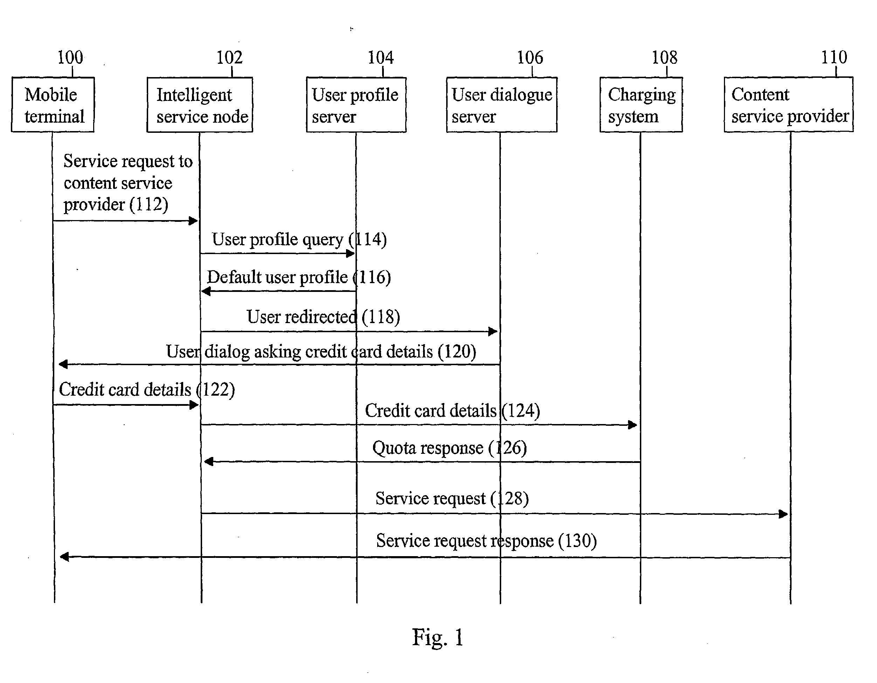

FIG. 1 discloses a signaling diagram illustrating one embodiment of a method according to the invention. In the exemplary embodiment of FIG. 1 a packet-data-based mobile communication network comprises a General Packet Radio service based mobile communication network the packet data transmission of which is based on Internet Protocol (IP). However, the present invention applies as well to e.g., Wireless Local Area Network based mobile communication networks, Code Division Multiple Access based mobile communication networks, Wideband Code Division Multiple Access based mobile communication networks, and Enhanced Data Rates for Global Evolution based mobile communication networks.

In the embodiment of FIG. 1, a user is roaming with his terminal in a General Packet Radio Service based mobile communication network. When the mobile terminal sends a service request to a service provider, the request is routed (step 112) to an intelligent service node 102. The service request refers e.g., to a Packet Data Protocol (PDP) context activation. The intelligent service node queries (step 114) from a user profile server 104 a user profile for the user. Since the International Mobile Subscriber Identity (IMSI) is a foreign one, a default user profile is used for the user. The default user profile defines e.g. which services are available for the user and the charging of these services. The user profile server 104 sends (step 116) the default user profile to the intelligent service node 102.

In the above, the intelligent service node 102 trapped the user session. The intelligent service node 102 redirects (step 118) the user to a user dialogue server 106 and a dialogue asking for a credit number is presented to the user of the mobile terminal 100 (step 120). The user enters the credit card details (credit card number and a money amount to use) and a response message is sent (step 122) back to the intelligent service node 102. Credit card details are sent (step 124) to a charging system 108. The charging system 108 may perform a credit card check. Furthermore, the charging system 108 creates a temporary account for the user, sets the account balance based on the given amount and sends (step 126) a response message to the intelligent service node 102. The response message comprises e.g. the amount of quota for the user.

After receiving the response message, the intelligent network node 102 redirects (step 128) the user to the content service provider 110. The content service provider 110 provides (step 130) the requested service to the mobile terminal 100. If a credit limit is reached while providing service to the mobile terminal 100, the intelligent service node 102 e.g. sends a new dialogue to the mobile terminal asking a permission to continue charging until a next credit limit is reached. In this way the user is kept informed and is in control of the expenditure.

For protocols not supporting session trapping (e.g. streaming etc.), the user session is blocked and a message, e.g. a short message, with address to a subscription portal is sent to the mobile terminal.

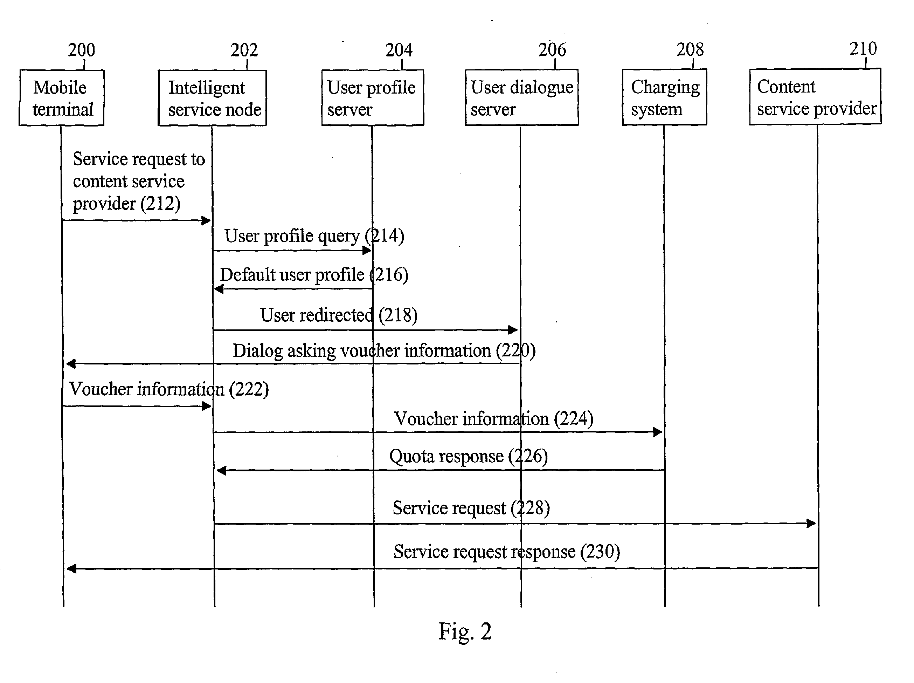

FIG. 2 discloses a signaling diagram illustrating another embodiment of a method according to the invention. In the exemplary embodiment of FIG. 2 a packet data based mobile communication network comprises a General Packet Radio Service based mobile communication network the packet data transmission of which is based on Internet Protocol (IP). However, the present invention applies as well to e.g. Wireless Local Area Network based mobile communication networks, Code Division Multiple Access based mobile communication networks, Wideband Code Division Multiple Access based mobile communication networks, and Enhanced Data Rates for Global Evolution based mobile communication networks.

In the embodiment of FIG. 2, a user is roaming with his terminal 200 in a General Packet Radio Service based mobile communication network. However, the user has bought a voucher e.g. from a local kiosk. The voucher refers e.g. to prepaid voucher that gives the user a certain amount of credit to use some services. When the mobile terminal 200 sends a service request to a service provider 210, the request is routed (step 212) to an intelligent service node 202. The service request refers e.g. to a Packet Data Protocol (PDP) context activation. The intelligent service node queries (step 214) from a user profile server 204 a user profile for the user. Since the International Mobile Subscriber Identity (IMSI) is a foreign one, a default user profile is used for the user. The default user profile defines e.g. which services are available for the user and the charging of these services. The user profile server 204 sends (step 216) the default user profile to the intelligent service node 202.

In the above, the intelligent service node 202 trapped the user session. The intelligent service node 202 redirects (step 218) the user to a user dialogue server 206 and a dialogue asking for voucher information is presented to the mobile terminal 200 (step 220). The user enters the voucher information (e.g. the sequence printed on the voucher) and a response message is sent (step 222) back to the intelligent service node 202. The voucher information is sent (step 224) to a charging system 208. The charging system 208 activates the voucher, creates a temporary account for the user, sets the account balance based on the voucher information and sends (step 226) a response message to the intelligent service node 202. The response message comprises e.g. the amount of quota for the user.

After receiving the response message, the intelligent service node 202 redirects (step 228) the user to the requested content service provider 210. The content service provider 210 provides (step 230) the requested service to the mobile terminal 200. In one embodiment, if the voucher limit is reached while providing service to the mobile terminal 200, the intelligent service node 202 sends a new dialogue to the mobile terminal asking for new voucher information. In another embodiment, the user of the mobile terminal 200 may be provided a message that the voucher has been consumed.

For protocols not supporting session trapping (e.g. streaming etc.), the user session is blocked and a message, e.g. a short message, with address to a subscription portal is sent to the mobile terminal.

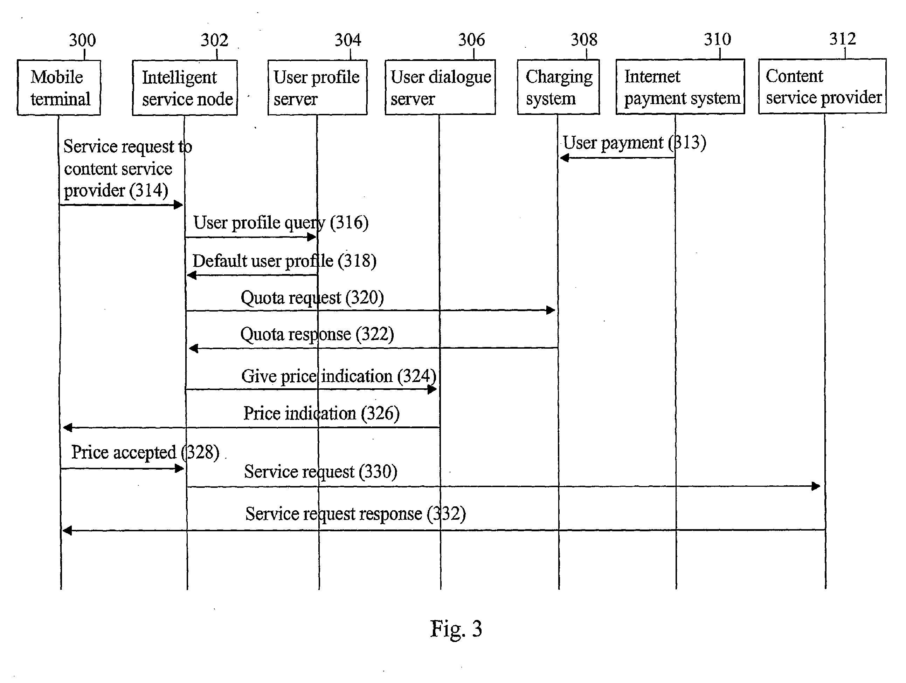

FIG. 3 discloses a signaling diagram illustrating one embodiment of a method according to the invention. In the exemplary embodiment of FIG. 3 a packet data based mobile communication network comprises a General Packet Radio Service based mobile communication network the packet data transmission of which is based on Internet Protocol (IP). However, the present invention applies as well to e.g. Wireless Local Area Network based mobile communication networks, Code Division Multiple Access based mobile communication networks, Wideband Code Division Multiple Access based mobile communication networks, and Enhanced Data Rates for Global Evolution based mobile communication networks.

In the embodiment of FIG. 3, a user is roaming with his terminal 300 in a General Packet Radio Service based mobile communication network. However, the user has previously accessed an Internet portal provided by one of the operators in that particular country in which the user is now roaming. The user provides the portal with adequate amount of information (e.g. credit card number, the amount, user information etc.). The Internet portal charges the user and provides (step 313) a charging system 308 of the mobile communication network with user payment information (e.g. the charged amount, user information etc.). Based on the user payment information the charging system 308 creates a temporary account for the user, sets the account balance based on the already charged amount.

When the mobile terminal 300 sends a service request to a service provider 312, the request is directed (step 314) to an intelligent service node 302. The service request refers e.g. to a Packet Data Protocol (PDP) context activation. The intelligent service node queries (step 316) from a user profile server 304 a user profile for the user. Since the International Mobile Subscriber Identity (IMSI) is a foreign one, a default user profile is used for the user. The default user profile defines e.g. which services are available for the user and the charging of these services. The user profile server 304 sends (step 318) the default user profile to the intelligent service node 302.

In the above, the intelligent service node 302 trapped the user session. The intelligent service node 302 identifies that the request comes from a user (mobile terminal) to which a temporary account has already been created. Moreover, a service profile may tell that the service requires price indication (e.g., if the price of some chargeable content is larger than some given value). Moreover, in one embodiment, the service profile may always require price indication or some other warning dialogue (telling e.g. about the privacy policy of the service in question). Furthermore, the user profile may also tell that the user requires price indication. The intelligent service node 302 sends (step 320) a quota request to the charging system 308, and in response to the quota request, the charging system 308 sends (step 322) a quota response back to the intelligent service node 302.

Since the user profile indicated that the user must be provided with price indication, the user is redirected (step 324) to a user dialogue server 306, which provides (step 326) the user with price indication. If the user accepts (step 328) the price indication, the intelligent service node 302 redirects (step 330) the user request to the content service provider 312. The content service provider 312 provides (step 332) the requested service to the mobile terminal 300.

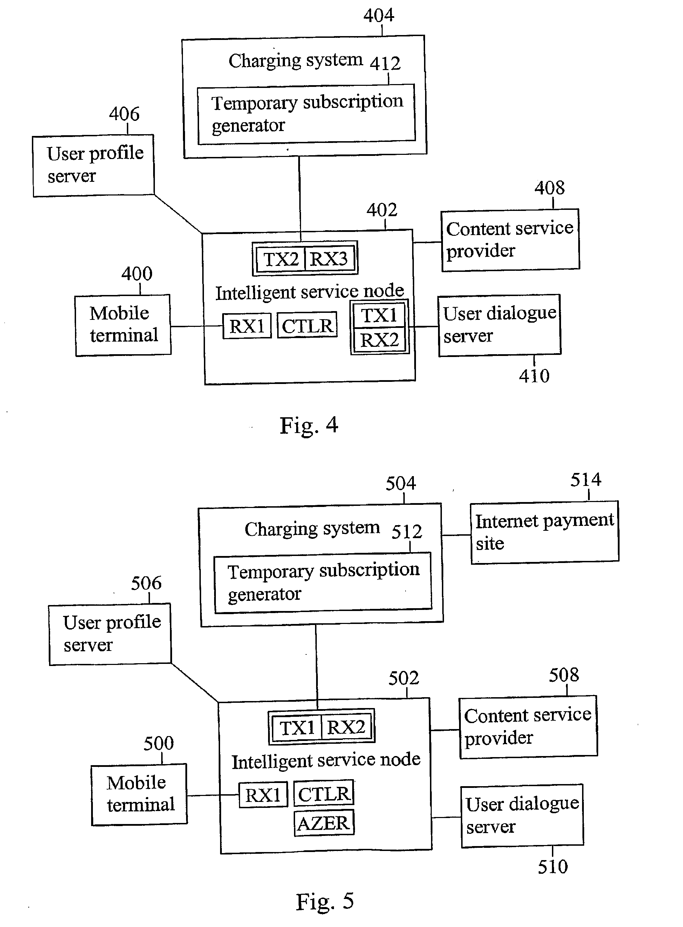

FIG. 4 discloses an embodiment of a system according to the invention. The system comprises a packet data based mobile communication network comprising a mobile terminal 400 that requests service from a content service provider 408 via an intelligent service node 402. The intelligent service node 402 refers e.g. to a Gateway GPRS Support Node that implements the functionality of the invention.

The intelligent service node 402 comprises a first receiver RX1 configured to receive a session establishment request from the mobile terminal 400, a controller CTRL configured to hold the session establishment request, a first transmitter TX1 configured to request charging information from the mobile terminal 400 and a second receiver RX2 configured to receive charging information from the mobile terminal 400. The charging information is received e.g. via a user dialogue server 410. The intelligent server node 402 further comprises a second transmitter TX2 configured to send a request for a temporary user subscription to a charging system 404 and a third receiver RX3 configured to receive a response from the charging system 404 after successful creation of the temporary user subscription. The controller CTRL is configured to continue the session establishment after successful creation of the temporary user subscription.

The charging system 404 comprises a temporary user subscription generator 412 configured to create a temporary user subscription for the roaming mobile terminal subscriber and to set an account balance for the temporary user subscription allowing the subscriber to use services attached to the temporary user subscription while roaming in the packet data based mobile communication network.

FIG. 5 discloses another embodiment of a system according to the invention. The system comprises a packet-data-based mobile communication network comprising a mobile terminal 500 that requests service from a content service provider 508 via an intelligent service node 502. The intelligent service node 502 refers e.g. to a Gateway GPRS Support Node that implements the functionality of the invention.

In the system disclosed in FIG. 5, a user has accessed an Internet payment site 514 provided by one of the operators in that particular country in which the mobile terminal 500 is now roaming. The user provides the Internet payment site 514 with adequate amount of information (e.g. credit card number, the amount, user information etc.) The Internet payment site 514 charges the user and provides a charging system 504 of the mobile communication network with user payment information (e.g. the charged amount, user information, etc.). Based on the user payment information a temporary user subscription generator 512 of the charging system 504 creates a temporary account for the user, sets the account balance based on the already charged amount allowing the subscriber to use services attached to the temporary user subscription while roaming in the packet data based mobile communication network.

The intelligent service node 502 comprises a first receiver RX1 configured to receive a session establishment request from the mobile terminal 500 and an analyzer AZER configured to identify that the session establishment request comes from a subscriber for which a temporary user subscription has already been created. The identification may be made e.g. based on the request coming from the subscriber. In another embodiment, the intelligent service node 502 may send a request to the charging system 504 in order to make the identification. The intelligent service node 502 further comprises a first transmitter TX1 configured to send a request for the created temporary user subscription to the charging system 504, a second receiver RX2 configured to receive subscription information from the temporary user subscription generator, and a controller CTLR configured to apply the created temporary user subscription for the roaming subscriber.

The above-mentioned means in the network elements may be implemented e.g. by using software, hardware or both. For example, network elements disclosed in the invention may comprise a single memory or memory area or to a plurality of memories or memory areas that may include e.g. random access memories (RAM), read-only memories (ROM) etc. The memory or memories also include other applications or software components that are not described in more detail and also may include the computer program (or portion thereof), which when executed on a central processing unit performs at least some of the steps disclosed in the invention. The central processing unit may also include memory or a memory may be associated therewith which may include the computer program (or portion thereof) which when executed on central processing unit performs at least some of the steps disclosed in the invention.

It is obvious to a person skilled in the art that with the advancement of technology, the basic idea of the invention may be implemented in various ways. The invention and its embodiments are thus not limited to the examples described above; instead they may vary within the scope of the claims.

Thus it is seen that the foregoing description has provided by way of exemplary and non-limiting examples a full and informative description of the best methods and apparatus presently contemplated by the inventors for charging a subscriber roaming in a mobile communication network. One skilled in the art will appreciate that the various embodiments described herein can be practiced individually; in combination with one or more other embodiments described herein; or in combination with interactive graphical user interfaces differing from those described herein. Further, one skilled in the art will appreciate that the present invention can be practiced by other than the described embodiments; that these described embodiments are presented for the purposes of illustration and not of limitation; and that the present invention is therefore limited only by the claims which follow.

## Claims

1. A method for charging a subscriber roaming in a packet data based mobile communication network for at least one packet data based subscriber service and/or network service, accessible through the packet data based mobile communication network, the method comprising:
receiving (313), from a non-home subscriber via a data communication network, a request to create a temporary user subscription for the non-home subscriber, the request including charging information for the non-home subscriber, and the request received prior to the non-home subscriber entering the packet data based mobile communication network;
based on the received request and charging information, creating a temporary user subscription for the non-home subscriber, the temporary user subscription associated with at least one packet data based subscriber service and/or network service;
setting an account balance for the temporary user subscription allowing the non-home subscriber to use the at least one packet data based subscriber service and/or network service associated with the temporary user subscription while roaming in the packet data based mobile communication network;
receiving (314) a packet data based session establishment request requesting the at least one packet data based subscriber service and/or network service at a service node (302, 402, 502) of the packet data based mobile communication network from a user terminal of the non-home subscriber roaming in the packet data based mobile communication network;
querying (316), by the service node, for a user profile for the non-home subscriber, and receiving (318) a default user profile of the packet data based mobile communication network;
in response to determining that the received user profile is a default user profile of the packet data based mobile communication network: holding the received packet data based session establishment request; and
further in response to identifying at the service node (302, 402, 502) that the packet data based session establishment request comes from a roaming non-home subscriber for which a temporary user subscription has already been created: applying the already created temporary user subscription for the roaming non-home subscriber, and continuing the packet data based session establishment by forwarding (330) the packet data based session establishment request to a provider of the requested at least one packet data based subscriber service and/or network service.

2. The method according to claim 1, wherein the request comprises charging information that comprises at least one of credit card information and a usage limit.

3. The method according to claim 2, wherein the charging information comprises at least a usage limit, whereby the method further comprises:
monitoring use of the at least one service by the roaming subscriber.

4. The method according to claim 3,
wherein the method further comprises:
when the usage limit is reached, sending a message asking permission to institute a new usage limit.

5. The method according to claim 2,
wherein the charging information comprises a sequence printed on a voucher.

6. A system for charging a subscriber roaming in a packet data based mobile communication network for at least one packet data based subscriber service and/or network service, accessible through the packet data based mobile communication network, the system comprising:
a temporary user subscription generator (412, 512) coupled to the packet data based mobile communication network, wherein the temporary user subscription generator (412, 512) is configured to create, based on a request received from a non-home subscriber via a data communication network prior to the non-home subscriber entering the packet data based mobile communication network, the request including charging information for the non-home subscriber, a temporary user subscription associated with at least one packet data based subscriber service and/or network service for the non-home subscriber , and to set an account balance for the temporary user subscription allowing the non-home subscriber to use the at least one packet data based subscriber service and/or network service associated with the temporary user subscription while roaming in the packet data based mobile communication network; and
a service node (302, 402, 502), coupled to the packet data based mobile communication network, wherein the service node (302, 402, 502) is configured to receive a packet data based session establishment request requesting the at least one packet data based subscriber service and/or network service from a user terminal of the non-home subscriber roaming in the packet data based mobile communication network; to query for a user profile for the non-home subscriber and to receive a default user profile of the packet data based mobile communication network; in response to determining that the received user profile is a default user profile of the packet data based mobile communication network: to hold the received packet data based session establishment request; and further in response to identifying that the packet data based session establishment request comes from a roaming non-home subscriber for which a temporary user subscription has already been created: to apply the created temporary user subscription for the roaming non-home subscriber, and to continue the packet data based session establishment by forwarding the packet data based session establishment request to a provider of the requested at least one packet data based subscriber service and/or network service.

7. The system according to claim 6, wherein the request comprises charging information that comprises at least one of credit card information and a usage limit.

8. The system according to claim 7, wherein the charging information comprises a sequence printed on a voucher.

## Patentansprüche

1. Verfahren zur Gebührenerfassung eines Teilnehmer-Roamings in einem auf Datenpaketen beruhenden Mobilkommunikationsnetzwerk für mindestens einen auf Datenpaketen beruhenden Teilnehmerdienst und/oder Netzwerkdienst, auf den durch das auf Datenpaketen beruhende Mobilkommunikationsnetzwerk zugegriffen werden kann, wobei das Verfahren folgende Schritte aufweist:
Empfangen (313) von einem Fremdteilnehmer über ein Datenkommunikationsnetzwerk einer Anforderung, für den Fremdteilnehmer ein vorübergehendes Benutzerabonnement zu erzeugen, wobei die Anforderung Gebührenerfassungsinformationen für den Fremdteilnehmer enthält, und die Anforderung empfangen wird, bevor der Fremdteilnehmer in das auf Datenpaketen beruhende Mobilkommunikationsnetzwerk eintritt;
beruhend auf der empfangenen Anforderung und den Gebührenerfassungsinformationen, Erzeugen eines vorübergehenden Benutzerabonnements für den Fremdteilnehmer, wobei das vorübergehende Benutzerabonnement mit mindestens einem auf Datenpaketen beruhenden Teilnehmerdienst und/oder Netzwerkdienst verknüpft ist;
Festlegen eines Kontoguthabens für das vorübergehende Benutzerabonnement, das es dem Fremdteilnehmer ermöglicht, den mindestens einen auf Datenpaketen beruhenden Teilnehmerdienst und/oder Netzwerkdienst, der mit dem vorübergehenden Benutzerabonnement verknüpft ist, während des Roamings im auf Datenpaketen beruhenden Mobilkommunikationsnetzwerk zu verwenden;
Empfangen (314) einer auf Datenpaketen beruhenden Sitzungsaufbauanforderung, die den mindestens einen auf Datenpaketen beruhenden Teilnehmerdienst und/oder Netzwerkdienst an einem Dienstknoten (302, 402, 502) des auf Datenpaketen beruhenden Mobilkommunikationsnetzwerks anfordert, von einem Benutzerendgerät des Fremdteilnehmer-Roamings in dem auf Datenpaketen beruhenden Mobilkommunikationsnetzwerk;
Abfragen (316) durch den Dienstknoten eines Benutzerprofils für den Fremdteilnehmer und Empfangen (318) eines Vorgabebenutzerprofils des auf Datenpaketen beruhenden Mobilkommunikationsnetzwerks;
als Reaktion auf eine Feststellung, dass das empfangene Benutzerprofil ein Vorgabebenutzerprofil des auf Datenpaketen beruhenden Mobilkommunikationsnetzwerks ist: Halten der empfangenen auf Datenpaketen beruhenden Sitzungsaufbauanforderung; und
ferner als Reaktion auf eine Identifikation am Dienstknoten (302, 402, 502), dass die auf Datenpaketen beruhende Sitzungsaufbauanforderung von einem Roaming-Fremdteilnehmer kommt, für den schon ein vorübergehendes Benutzerabonnement erzeugt worden ist: Anwenden des schon erzeugten vorübergehenden Benutzerabonnements für den Roaming-Fremdteilnehmer, und Fortsetzen des auf Datenpaketen beruhenden Sitzungsaufbaus durch Weiterleiten (330) der auf Datenpaketen beruhenden Sitzungsaufbauanforderung an einen Anbieter des angeforderten mindestens einen auf Datenpaketen beruhenden Teilnehmerdienstes und/oder Netzwerkdienstes.

2. Verfahren nach Anspruch 1, wobei die Anforderung Gebührenerfassungsinformationen aufweist, die Kreditkarteninformationen und/oder ein Nutzungslimit aufweisen.

3. Verfahren nach Anspruch 2, wobei die Gebührenerfassungsinformationen mindestens ein Nutzungslimit aufweisen, wodurch das Verfahren ferner aufweist:
Überwachen der Nutzung des mindestens einen Dienstes durch den Roaming-Teilnehmer.

4. Verfahren nach Anspruch 3, wobei das Verfahren ferner aufweist:
wenn das Nutzungslimit erreicht ist, Senden einer Nachricht, die nach einer Erlaubnis fragt, ein neues Nutzungslimit einzurichten.

5. Verfahren nach Anspruch 2, wobei die Gebührenerfassungsinformationen eine auf einen Gutschein gedruckte Sequenz aufweisen.

6. System zur Gebührenerfassung eines Teilnehmer-Roamings in einem auf Datenpaketen beruhenden Mobilkommunikationsnetzwerk für mindestens einen auf Datenpaketen beruhenden Teilnehmerdienst und/oder Netzwerkdienst, auf den durch das auf Datenpaketen beruhende Mobilkommunikationsnetzwerk zugegriffen werden kann, wobei das System Folgendes aufweist:
einen Generator (412, 512) eines vorübergehenden Benutzerabonnements, der mit dem auf Datenpaketen beruhenden Mobilkommunikationsnetzwerk gekoppelt ist, wobei der Generator (412, 512) eines vorübergehenden Benutzerabonnements konfiguriert ist, beruhend auf einer Anforderung, die von einem Fremdteilnehmer über ein Datenkommunikationsnetzwerk empfangen wird, bevor der Fremdteilnehmer in das auf Datenpaketen beruhende Mobilkommunikationsnetzwerk eintritt, wobei die Anforderung Gebührenerfassungsinformationen für den Fremdteilnehmer enthält, ein vorübergehendes Benutzerabonnement zu erzeugen, das mit mindestens einem auf Datenpaketen beruhenden Teilnehmerdienst und/oder Netzwerkdienst für den Fremdteilnehmer verknüpft ist, und ein Kontoguthaben für das vorübergehende Benutzerabonnement festzulegen, das es dem Fremdteilnehmer ermöglicht, den mindestens einen auf Datenpaketen beruhenden Teilnehmerdienst und/oder Netzwerkdienst, der mit dem vorübergehenden Benutzerabonnement verknüpft ist, während des Roamings im auf Datenpaketen beruhenden Mobilkommunikationsnetzwerk zu verwenden; und
einen Dienstknoten (302, 402, 502), der mit dem auf Datenpaketen beruhenden Mobilkommunikationsnetzwerk gekoppelt ist, wobei der Dienstknoten (302, 402, 502) konfiguriert ist, eine auf Datenpaketen beruhende Sitzungsaufbauanforderung, die den mindestens einen auf Datenpaketen beruhenden Teilnehmerdienst und/oder Netzwerkdienst anfordert, von einem Benutzerendgerät des Fremdteilnehmer-Roamings in dem auf Datenpaketen beruhenden Mobilkommunikationsnetzwerk zu empfangen; ein Benutzerprofil für den Fremdteilnehmer abzufragen und ein Vorgabebenutzerprofil des auf Datenpaketen beruhenden Mobilkommunikationsnetzwerks zu empfangen; als Reaktion auf eine Feststellung, dass das empfangene Benutzerprofil ein Vorgabebenutzerprofil des auf Datenpaketen beruhenden Mobilkommunikationsnetzwerks ist: die empfangene auf Datenpaketen beruhende Sitzungsaufbauanforderung zu halten; und ferner als Reaktion auf eine Identifikation, dass die auf Datenpaketen beruhende Sitzungsaufbauanforderung von einem Roaming-Fremdteilnehmer kommt, für den schon ein vorübergehendes Benutzerabonnement erzeugt worden ist: das erzeugte vorübergehende Benutzerabonnement für den Roaming-Fremdteilnehmer anzuwenden, und den auf Datenpaketen beruhenden Sitzungsaufbau durch Weiterleiten der auf Datenpaketen beruhenden Sitzungsaufbauanforderung an einen Anbieter des angeforderten mindestens einen auf Datenpaketen beruhenden Teilnehmerdienstes und/oder Netzwerkdienstes fortzusetzen.

7. System nach Anspruch 6, wobei die Anforderung Gebührenerfassungsinformationen aufweist, die Kreditkarteninformationen und/oder ein Nutzungslimit aufweisen.

8. System nach Anspruch 7, wobei die Gebührenerfassungsinformationen eine auf einen Gutschein gedruckte Sequenz aufweisen.

## Revendications

1. Procédé de taxation d'un abonné itinérant dans un réseau de communication mobile à base de données par paquets pour au moins un service d'abonné à base de données par paquets et/ou au moins un service de réseau, accessible par l'intermédiaire du réseau de communication mobile à base de données par paquets, le procédé comprenant :
la réception (313), en provenance d'un abonné non local via un réseau de communication de données, d'une demande de création un abonnement d'utilisateur temporaire pour l'abonné non local, la demande comportant une information de taxation pour l'abonné non local, et de la demande reçue avant que l'abonné non local ne pénètre dans le réseau de communication mobile à base de données par paquets ;
sur la base de la demande et de l'information de taxation reçues, la création d'un abonnement d'utilisateur temporaire pour l'abonné non local, l'abonnement d'utilisateur temporaire étant associé à au moins un service d'abonné à base de données par paquets et/ou à au moins un service de réseau ;
la définition d'un solde de compte pour l'abonnement d'utilisateur temporaire permettant à l'abonné non local d'utiliser l'au moins un service d'abonné à base de données par paquets et/ou l'au moins un service de réseau associé à l'abonnement d'utilisateur temporaire pendant l'itinérance dans le réseau de communication mobile à base de données par paquets ;
la réception (314) d'une demande d'établissement de session à base de données par paquets demandant l'au moins un service d'abonné à base de données par paquets et/ou l'au moins un service de réseau sur un noeud de service (302, 402, 502) du réseau de communication mobile à base de données par paquets en provenance d'un terminal utilisateur de l'abonné non local itinérant dans le réseau de communication mobile à base de données par paquets ;
l'envoi d'une requête (316), par le noeud de service,
concernant un profil d'utilisateur pour l'abonné non local, et la réception (318) d'un profil d'utilisateur par défaut du réseau de communication mobile à base de données par paquets ;
en réponse à la détermination du fait que le profil d'utilisateur reçu est un profil d'utilisateur par défaut du réseau de communication mobile à base de données par paquets : le fait de retenir la demande d'établissement de session à base de données par paquets reçue ; et
en outre, en réponse à l'identification, sur le noeud de service (302, 402, 502), du fait que la demande d'établissement de session à base de données par paquets provient d'un abonné non local itinérant pour lequel un abonnement d'utilisateur temporaire a déjà été créé : l'application de l'abonnement d'utilisateur temporaire déjà créé pour l'abonné non local itinérant,
et la poursuite de l'établissement de la session à base de données par paquets par réacheminement (330) de la demande d'établissement de session à base de données par paquets vers un fournisseur de l'au moins un service d'abonné à base de données par paquets demandé et/ou de l'au moins un service de réseau demandé.

2. Procédé selon la revendication 1, dans lequel la demande comprend une information de taxation qui comprend au moins l'une d'une information de carte de crédit et d'une limite d'utilisation.

3. Procédé selon la revendication 2, dans lequel l'information de taxation comprend au moins une limite d'utilisation, le procédé comprenant en outre :
la surveillance de l'utilisation de l'au moins un service par l'abonné itinérant.

4. Procédé selon la revendication 3, dans lequel le procédé comprend en outre :
lorsque la limite d'utilisation est atteinte, l'envoi d'un message demandant la permission d'instituer une nouvelle limite d'utilisation.

5. Procédé selon la revendication 2, dans lequel l'information de taxation comprend une séquence imprimée sur un bordereau.

6. Système de taxation d'un abonné itinérant dans un réseau de communication mobile à base de données par paquets pour au moins un service d'abonné à base de données par paquets et/ou au moins un service de réseau, accessible par l'intermédiaire du réseau de communication mobile à base de données par paquets, le système comprenant :
un générateur d'abonnement d'utilisateur temporaire (412, 512) couplé au réseau de communication mobile à base de données par paquets, dans lequel le générateur d'abonnement d'utilisateur temporaire (412, 512) est configuré pour créer, sur la base d'une demande reçue en provenance d'un abonné non local via un réseau de communication de données avant que l'abonné non local ne pénètre dans le réseau de communication mobile à base de données par paquets, la demande comportant une information de taxation pour l'abonné non local, un abonnement d'utilisateur temporaire associé à au moins un service d'abonné à base de données par paquets et/ou à au moins un service de réseau pour l'abonné non local et pour définir un solde de compte pour l'abonnement d'utilisateur temporaire permettant à l'abonné non local d'utiliser l'au moins un service d'abonné à base de données par paquets et/ou l'au moins un service de réseau associé à l'abonnement d'utilisateur temporaire pendant l'itinérance dans le réseau de communication mobile à base de données par paquets ; et
un noeud de service (302, 402, 502), couplé au réseau de communication mobile à base de données par paquets, dans lequel le noeud de service (302, 402, 502) est configuré pour recevoir une demande d'établissement de session à base de données par paquets demandant l'au moins un service d'abonné à base de données par paquets et/ou l'au moins un service de réseau en provenance d'un terminal utilisateur de l'abonné non local itinérant dans le réseau de communication mobile à base de données par paquets ; pour envoyer une requête concernant un profil d'utilisateur pour l'abonné non local et pour recevoir un profil d'utilisateur par défaut du réseau de communication mobile à base de données par paquets ; en réponse à la détermination du fait que le profil d'utilisateur reçu est un profil d'utilisateur par défaut du réseau de communication mobile à base de données par paquets : pour retenir la demande d'établissement de session à base de données par paquets reçue ; et en outre, en réponse à l'identification du fait que la demande d'établissement de session à base de données par paquets provient d'un abonné non local itinérant pour lequel un abonnement d'utilisateur temporaire a déjà été créé : pour appliquer l'abonnement d'utilisateur temporaire créé pour l'abonné non local itinérant, et pour poursuivre l'établissement de la session à base de données par paquets par réacheminement de la demande d'établissement de session à base de données par paquets vers un fournisseur de l'au moins un service d'abonné à base de données par paquets et/ou de l'au moins un service de réseau.

7. Système selon la revendication 6, dans lequel la demande comprend une information de taxation qui comprend au moins l'une d'une information de carte de crédit et d'une limite d'utilisation.

8. Système selon la revendication 7, dans lequel l'information de taxation comprend une séquence imprimée sur un bordereau.
